# FASCICULE DE BREVET EUROPEEN

(11) **EP 4 227 110 B1**
(45) Date de publication et mention de la délivrance du brevet: **25.09.2024**
(21) Numéro de dépôt: 23155192.0
(22) Date de dépôt: 06.02.2023
(51) Int. Cl.: B60B 17/00, B60B 17/02, B61F 9/00

(54) **JANTE DE SUPPORT DE BANDAGE POUR GALET DE ROULEMENT ASSOCIÉ À UN FLASQUE**
FELGE FÜR EINE LAUFFLÄCHE FÜR EINE LAUFROLLE, DIE MIT EINEM FLANSCH VERBUNDEN IST
SUPPORT RIM FOR A TYRE FOR A ROLLER ASSOCIATED WITH A FLANGE

(30) Priorité: 15.02.2022 FR 2201322
(43) Date de publication de la demande: 16.08.2023
(73) Titulaire: ALSTOM Transport SA, 93400 St-Ouen sur Seine (FR)
(72) Inventeur: BEBON, Dominique, 67720 Weyersheim (FR); GEIGER, Paul, 67120 Dachstein (FR)
(74) Mandataire: Cabinet Nuss

(56) Documents cités:
- WO-A1-2013/061263
- FR-A1- 2 865 986
- FR-A1- 3 032 381

## Description

La présente invention se rapporte au domaine des mécanismes des galets de roulement portant un flasque de véhicule roulant contre un rail et plus particulièrement au domaine des systèmes de gestion de la chaleur au niveau de tels galets de roulement.

Dans le cadre du déplacement de véhicules guidés par rails et notamment dans le cadre de véhicules monorails, l'entrainement fait intervenir le frottement d'une paire de galets portant un flasque pour interagir avec un rail de guidage. Ces galets de forme annulaires sont configurés pour pivoter axialement et appuyer par leurs flasques contre le rail de guidage, de part et d'autre de celui-ci de façon à permettre le déplacement du véhicule le long du rail. A ce titre, la publication WO 2013/061263 propose une illustration de ce type de mécanisme de guidage. L'entrainement du véhicule par rotation des flasques des galets, conduit ainsi à un échauffement de certaines pièces en frottement dans le cadre de leur fonctionnement. C'est ainsi que, d'une part, la surface périphérique du bandage porté par le galet ou monté sur le galet pour être en contact contre la surface du rail fait l'objet d'un échauffement lors du déplacement du véhicule. De même, les différentes pièces du mécanisme de roulement du flasque qui participent à la gestion de son pivotement axial supportent un échauffement dans le cadre de l'entrainement et du guidage du véhicule. Toutefois, un tel échauffement de ces galets, en particulier au niveau de zones d'interaction et de contact avec d'autres pièces, est susceptible d'entraîner des phénomènes de déformation, par exemple des dilatations, des surfaces concernées. De tels déformations impactent la qualité du fonctionnement des pièces entre elles et sont également susceptibles d'entraîner des dégradations lorsqu'elles touchent des zones en échauffement qui supportent des contraintes importantes.

La présente invention a pour but de pallier ces inconvénients en proposant un dispositif permettant d'opérer une limitation de l'échauffement d'un galet et du flasque correspondant, voire même son refroidissement, tout en autorisant une intégration facilitée dans un tel ensemble.

L'invention a ainsi pour objet une jante de support de bandage pour un galet annulaire de roulement comprenant au moins une bague extérieure dont une partie prolongée sous la forme d'un disque sur la périphérie de la bague extérieure réalise un flasque dont l'extrémité du bord périphérique est configurée pour coopérer avec un rail de guidage, la jante comprenant un arrangement annulaire sensiblement circulaire définissant :
- un bord périphérique destiné à porter un bandage,
- un bord médial destiné à être en contact avec une surface extérieure médiale de la bague extérieure du galet, et
- deux faces opposées réalisant, d'une part, une face ouverte et, d'autre part, une face d'appui configurée pour être positionnée contre la surface du flasque du galet de roulement,
caractérisée en ce que la jante de support intègre un dispositif de refroidissement comprenant au moins un conduit de circulation d'air traversant l'épaisseur de la jante de sorte que le conduit comprend au moins un orifice positionné au niveau de la face ouverte de la jante et un circuit arrangé de sorte que, d'une part, au moins une première portion est positionnée au niveau du bord médial du dispositif et, d'autre part, au moins une seconde portion est positionnée radialement au niveau de la face d'appui depuis le bord médial vers le bord périphérique de la jante.

L'invention se rapporte également à un ensemble comprenant un galet de roulement réalisant un flasque associé à une jante de support de bandage selon l'invention intégrant un dispositif de refroidissement.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

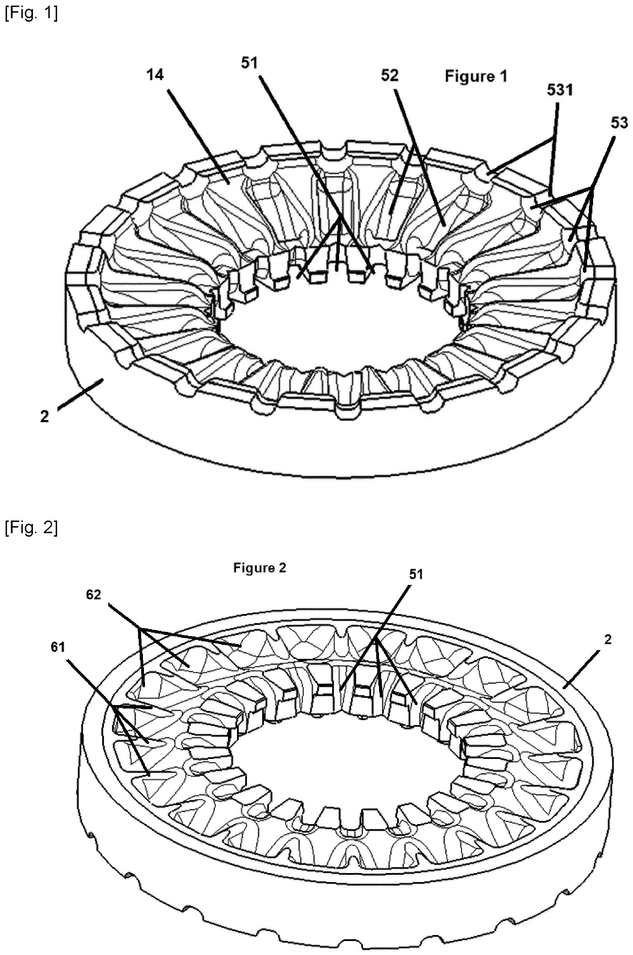

[Fig. 1] représente une illustration schématique d'un premier exemple de jante de support selon l'invention selon une vue en élévation du côté de la face d'appui de la jante.
[Fig. 2] représente une illustration schématique d'un premier exemple de jante de support selon l'invention selon une vue en élévation du côté de la face ouverte de la jante.

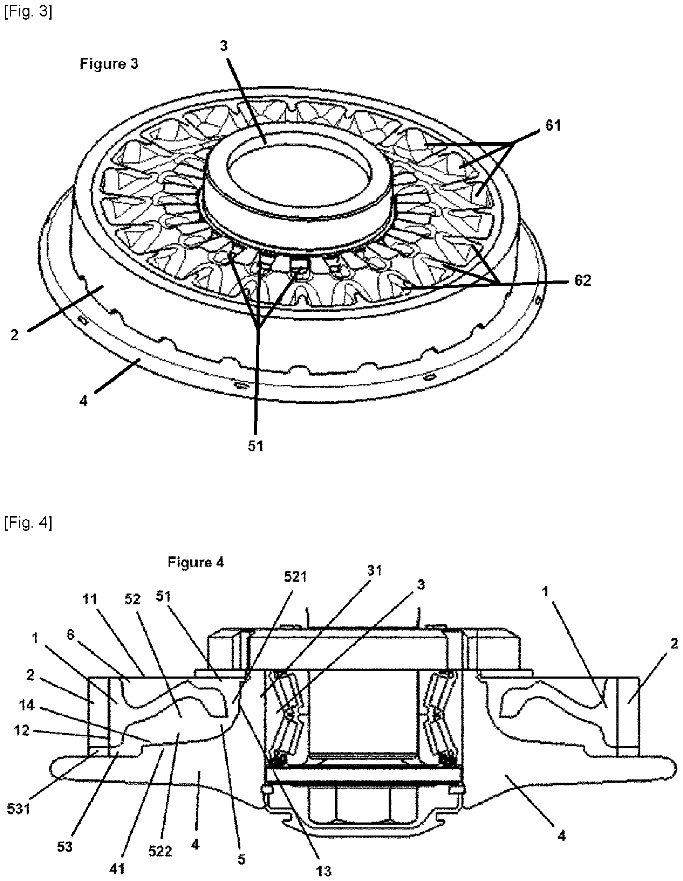

Fig. 3] représente une illustration schématique d'un ensemble associant le premier exemple de jante de support selon l'invention avec un flasque selon une vue en élévation du côté de la face ouverte de la jante.
Fig. 4] représente une illustration schématique en section d'un exemple de jante de support selon l'invention selon une vue en section passant par l'axe de rotation du flasque associé.

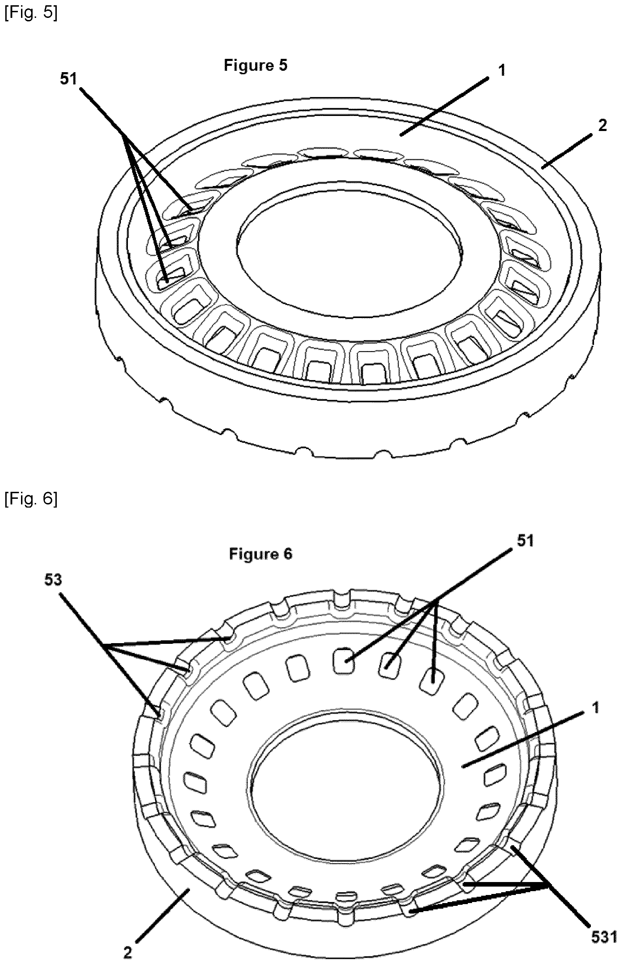

[Fig. 5] représente une illustration schématique d'un second exemple de jante de support selon l'invention selon une vue en élévation du côté de la face ouverte de la jante.
[Fig. 6] représente une illustration schématique d'un second exemple de jante de support selon l'invention selon une vue en élévation du côté de la face d'appui de la jante.

L'invention concerne une jante 1 de support de bandage 2 pour un galet annulaire de roulement comprenant au moins une bague extérieure 31 dont une partie prolongée sous la forme d'un disque sur la périphérie de la bague extérieure 31 réalise un flasque 4 dont l'extrémité du bord périphérique est configurée pour coopérer avec un rail de guidage, la jante 1 comprenant un arrangement annulaire sensiblement circulaire définissant :
- un bord périphérique 12 destiné à porter un bandage 2,
- un bord médial 13 destiné à être en contact avec une surface extérieure médiale de la bague extérieure 31 du galet, et
- deux faces opposées réalisant, d'une part, une face ouverte 11 et, d'autre part, une face d'appui 14 configurée pour être positionnée contre la surface du flasque 4 du galet de roulement,
caractérisée en ce que la jante 1 de support intègre un dispositif de refroidissement 5 comprenant au moins un conduit 52 de circulation d'air traversant l'épaisseur de la jante 1 de sorte ue le conduit 52 comprend au moins un orifice 51 positionnée au niveau de la face ouverte 11 de la jante 1 et un circuit arrangé de sorte que, d'une part, au moins une première portion 521 est positionnée au niveau du bord médial 13 du dispositif 5 et, d'autre part, au moins une seconde portion 522 est positionnée radialement au niveau de la face d'appui 14 depuis le bord médial 13 vers le bord périphérique 12 de la jante 1.

La jante 1 selon l'invention est ainsi configurée de façon à intégrer un conduit 52 de circulation d'air à l'intérieur duquel le déplacement de l'air réalise un moyen de récupération et d'évacuation de la chaleur qui se dissipe depuis les surfaces en échauffement vers l'intérieur de la jante 1. Le circuit du conduit 52 est ainsi arrangé pour fournir un flux d'air dans l'épaisseur de la jante 1, de sorte que ce flux d'air se déplace au plus près des parties en échauffement de la jante 1, c'est-à-dire des parties de la jante 1 en contact ou susceptible d'être en contact avec les portions en échauffement du galet de roulement et/ou du bandage 2. Ainsi, le flux d'air en déplacement à l'intérieur du conduit 52 de circulation circule par une première portion 521 au niveau du bord médial 13 de la jante 1, de façon à être positionnée à proximité d'une surface extérieure de la bague extérieure 31 du galet positionné à proximité de l'axe de rotation du galet, pour être au plus près du mécanisme de roulement 3 du galet qui supporte un important échauffement dans le cadre de sa rotation axiale. De même, le flux d'air en déplacement circule au niveau d'une seconde portion 522 positionnée radialement au niveau de la face d'appui 14 depuis le bord médial 13 vers le bord périphérique 12 de la jante 1 de façon à permettre une récupération de chaleur à proximité de la partie extérieure ou périphérique du flasque 4 et de la jante 1, au niveau de la périphérie qui porte un bandage 2 en échauffement sous l'effet de son frottement et de son roulement contre la surface d'un rail. Il convient également de relever que la circulation du flux d'air selon une orientation radiale sur au moins une partie de sa course permet d'opérer un échange de chaleur, et donc un refroidissement au niveau de différentes portions de la jante 1 en contact avec un échauffement de la surface extérieure de la bague extérieure 31 du galet positionné à proximité de l'axe de rotation du galet et/ou de la partie du galet qui réalise le flasque 4.

Selon un exemple se rapportant à une variante de construction, au moins une portion du conduit 52 est réalisée sous la forme d'une section ouverte destinée à être cloisonnée par au moins une partie de la surface extérieure médiale de la bague extérieure 31 du galet et/ou une partie de la surface 41 du flasque 4 du galet. Selon cette variante, le conduit 52 réalisé dans la jante 1 présente un arrangement dont le cloisonnement est susceptible d'être obtenu par coopération avec au moins une partie de la surface périphérique du galet, c'est-à-dire de la surface extérieure de la bague extérieure 31 du galet positionnée à proximité de l'axe de rotation du galet et/ou de la partie du galet qui réalise le flasque 4. Un tel conduit 52 autorise donc une construction facilitée de la jante 1 qui intègre ce conduit 52. En effet, la jante 1 est alors en mesure d'être réalisée par moulage sans qu'une opération de perçage traversant de la jante 1 ne soit nécessaire pour construire l'intégralité du conduit 52. Le cloisonnement du conduit 52 s'opère par le positionnement et le montage de la jante 1 au niveau de la surface extérieure de la bague extérieure 31 du galet et/ou de la surface du flasque 4 du galet. Il convient également de relever qu'une telle construction du conduit 52 permet de réaliser une circulation du flux d'air dans la jante 1 de sorte que l'échange de chaleur, et donc le refroidissement, soit optimisé en étant effectué au plus près des différentes surfaces et pièces en échauffement, notamment au niveau du galet. En effet, le flux d'air en circulation à l'intérieur de la jante 1 se déplace directement au contact d'une ou de plusieurs des surfaces et pièces en échauffement. Le conduit 52 étant réalisé par la combinaison et la coopération de forme, d'une part, du bord médial 13 et de la surface d'appui 14 et, d'autre part, de la surface extérieure du galets, au niveau des portions du conduit 52 pour un échange de chaleur, le contact direct du flux d'air en déplacement contre les surfaces de pièces en échauffement sans présence d'une quelconque épaisseur de jante 1 permet d'optimiser la qualité de l'échange thermique.

Selon un exemple se rapportant à une autre variante de construction susceptible d'être combinée avec les variantes de construction précédemment mentionnées, le conduit 52 comprend un second orifice 53 positionné à une distance de l'axe de pivotement de la jante 1 qui est différente de la distance séparant, d'une part, l'orifice 51 positionné au niveau de la face ouverte 11 de la jante 1 et, d'autre part, l'axe de pivotement de la jante 1. Cet arrangement particulier de la position des orifices 51, 53 du conduit 52 entre eux réalise un décalage de position radiale entre le premier orifice 51 et le second orifice 53 dans le plan de pivotement de la jante 1. Un tel décalage de position entre les deux orifices 51, 53 permet, lors du fonctionnement par rotation axiale de la jante 1 avec le galet, de générer une force centrifuge plus importante au niveau de l'orifice le plus éloigné de l'axe de pivotement de la jante 1, de sorte que l'air à l'intérieur du conduit 52 se trouve naturellement, d'une part, expulsé au niveau de l'orifice du conduit 52 le plus éloigné de l'axe de pivotement de la jante 1 et, d'autre part, par différence de pression, aspiré au niveau de l'orifice du conduit 52 le plus proche de l'axe de pivotement de la jante 1. Cet arrangement permet ainsi la réalisation d'une circulation d'air à l'intérieur du conduit 52 sans nécessiter l'intégration d'un moteur dédié au déplacement de l'air dans le conduit 52. A titre d'exemple de construction, le premier orifice 51 du conduit 52 débouchant au niveau de la face ouverte 11 de la jante 1 est positionné plus proche de l'axe de pivotement de la jante 1 qu'un second orifice 53. Ainsi, le flux d'air à l'intérieur du conduit 52 du dispositif de refroidissement 5 réalise un déplacement depuis ce premier orifice 51 du conduit 52 vers un second orifice 53. Cette construction permet ainsi d'opérer une circulation du flux d'air de sorte que l'air le plus frais circule prioritairement au niveau de la première portion 521 du conduit 52, c'est-à-dire à proximité et/ou contre une portion de la surface de la bague extérieure 31 du galet la plus proche du mécanisme de roulement 3, avant de circuler au niveau de la seconde portion 522 du conduit, c'est-à-dire à proximité et/ou contre la surface 41 portée par le flasque 4 du galet.

Selon un exemple se rapportant à une autre variante de construction susceptible d'être combinée avec les variantes de construction précédemment mentionnées, le conduit 52 au niveau de la seconde portion 522 de son circuit présente au moins une section plus importante qu'au niveau de la première portion 521 de son circuit. Cette différence de section entre les différentes portions du conduit 52 permet d'opérer un ajustement de la vitesse de déplacement du flux d'air à l'intérieur du circuit. En effet, le flux d'air présente une vitesse de déplacement plus importante au niveau de portions du conduit 52 de section plus réduite. Ainsi, au niveau de la première portion 521 du conduit 52 positionnée au niveau de la surface de la bague extérieure 31 du galet la plus proche du mécanisme de roulement 3, le flux d'air présente une vitesse de circulation plus importante. La différence de températures entre le flux d'air en déplacement et les surfaces en échauffement est ainsi maintenue avec un écart constant, de sorte que le flux d'air continu permet un échange thermique optimisé au niveau des surfaces en échauffement du galet. Par ailleurs, la section au niveau de la seconde portion 522 du conduit 52 présente un dimensionnement plus important de façon à opérer un échange de chaleur au niveau d'un volume plus important à l'intérieur de la jante 1. En effet, cette seconde portion 522 est arrangée pour être disposée au niveau de la surface 41 du flasque 4 du galet selon une orientation sensiblement radiale. De façon préférée, cette seconde portion 522 est configurée de sorte qu'une partie de la surface du conduit 52 soit également positionnée dans l'épaisseur de la jante 1 de façon à être située à proximité de la face ouverte 11 de la jante 1, voire au niveau d'une extrémité située à proximité d'au moins une partie du bord périphérique 12 de la jante 1. Cet arrangement permet ainsi, outre une récupération de chaleur au niveau d'au moins une partie du flasque 4, un échange thermique avec le bord périphérique 12 de la jante 1 en contact avec le bandage 2 en échauffement. De même, le flux d'air en déplacement au niveau de cette seconde portion 522 du conduit 52 est susceptible d'opérer un échange calorique sous la forme d'une libération de chaleur au niveau de la portion du conduit 52 positionnée à proximité de la face ouverte 11 de la jante 1, cette face ouverte 11 étant en contact avec l'extérieur de la jante 1, elle réalise alors naturellement l'une des surfaces les moins chaudes de la jante 1 lorsque le véhicule est en fonctionnement. Une libération de chaleur au niveau de cette surface externe que réalise la face ouverte 11 de la jante 1 s'en trouve ainsi facilitée.

Selon un exemple se rapportant à une variante de construction spécifique de la variante de construction précédemment mentionnée, au moins une partie de la seconde portion 522 du circuit du conduit 52 présente une section dont au moins une largeur est au moins supérieure à une épaisseur de la jante 1. Selon cette variante de construction, lorsque la seconde portion 522 du conduit 52 est réalisée par une interaction complémentaire entre, d'une part, la jante 1 et, d'autre part, une partie de la surface 41 du flasque 4 du galet, la jante 1 en appui contre le flasque 4 présente une épaisseur amincie selon certaines sections de sa structure. Cet amincissement de l'épaisseur se trouve notamment constaté dans un plan parallèle à l'axe de rotation du galet et donc du flasque 4 de celui-ci, de sorte que l'essentiel de la hauteur de la jante 1 est réalisé par un volume correspondant au conduit 52 en interaction directe avec la surface 41 du flasque 4 du galet.

Selon un exemple se rapportant à une autre variante de construction susceptible d'être combinée avec les variantes de construction précédemment mentionnées, le conduit 52 comprend au moins un second orifice 53 positionné au niveau du bord périphérique 12 de la jante 1. Le positionnement d'un second orifice 53 du conduit 52 en extrémité périphérique de la jante 1 permet d'opérer une extraction optimisée de l'air par force centrifuge. De même, ce positionnement permet d'opérer un échange thermique au niveau de la portion de la jante 1 destinée à porter le bandage 2. Par ailleurs, lorsque la jante 1 est associée à un bandage 2, ce bandage 2 est susceptible de présenter une hauteur qui soit inférieure à la hauteur du bord périphérique 12 de la jante 1 de façon à ne pas obturer l'orifice 53 du conduit 52 en extrémité périphérique de la jante 1, cet orifice 53 étant positionné à une extrémité du bord périphérique 12 de la jante 1 qui se trouve à proximité de la face ouverte 11 ou de la face d'appui 14 de la jante 1. De façon alternative, le bandage 2 est également susceptible de comprendre un orifice traversant 531 arrangé de façon à être positionné dans le prolongement du second orifice 53 du conduit 52 intégré à la jante 1. Cet orifice traversant 531 du bandage 2 participe ainsi également à l'optimisation des échanges thermiques avec le bandage 2 de façon à en limiter l'échauffement, voire à en permettre le refroidissement. Selon un exemple correspondant à une variante de construction spécifique, cet orifice traversant 531 est réalisé par un évidement réalisé au niveau de la surface du bandage 2 destinée à être en appui contre le flasque 4 du galet, de sorte que l'orifice traversant 531 est réalisée par la coopération du bandage 2 avec la surface 41 du flasque 4. A titre d'exemple complémentaire, le bandage 2 est également susceptible d'être constitué d'une matière sensiblement poreuse au niveau d'une portion de sa surface positionnée au niveau du second orifice 53 du conduit 52 intégré à la jante 1. Cette porosité du bandage 2 permet ainsi une perméabilité qui autorise un déplacement du flux d'air au travers du bandage 2 pour permettre la circulation d'un flux de refroidissement à l'intérieur du conduit 52 de la jante 1.

Selon un exemple se rapportant à une autre variante de construction susceptible d'être combinée avec l'une ou l'autre des variantes de construction précédemment mentionnées, le conduit 52 comprend un seconde orifice 53 et/ou au moins un orifice supplémentaire positionné au niveau de la face 14 de la jante 1 en appui contre la surface 41 du flasque 4. Cet orifice du conduit 52 positionné au niveau de la surface 41 du flasque 4 est destiné à être en vis-à-vis d'un orifice porté par la surface 41 du flasque 4 et correspondant à une extrémité d'un conduit disposé au travers de l'épaisseur du flasque 4 du galet. Aussi, le flux d'air en circulation dans le conduit 52 de la jante 1 traverse également l'épaisseur du flasque 4, préalablement ou postérieurement à son déplacement à l'intérieur du conduit 52, et participe au refroidissement du flasque 4 du galet.

Il convient de relever que, dans le cadre de la réalisation du dispositif de refroidissement 5, le conduit 52 est susceptible de comprendre un ou plusieurs orifices d'admission d'air et un ou plusieurs orifices d'évacuation d'air. En effet, le conduit 52 est susceptible de présenter une ramification de la circulation du flux d'air au niveau de chacune de ses extrémités.

Selon un exemple se rapportant à une autre variante de construction susceptible d'être combinée avec les variantes de construction précédemment mentionnées, la face ouverte 11 comprend au moins un relief 6 réalisant une ailette 61 orientée radialement. La face ouverte 11 de la jante 1 présente ainsi un arrangement qui, dans le cadre de sa rotation axiale avec le galet de roulement, est en mesure de générer des turbulences au niveau de la surface de la jante 1. La au moins une ailette 61 réalisée par ce relief de surface, en étant orientée radialement sur la face ouverte 11 de la jante 1, permet d'optimiser le brassage et la ventilation de l'air en présence au niveau de la surface de la jante 1. Ces mouvements d'air au niveau de la surface 11 de la jante 1 facilitent l'aspiration d'air frais au niveau du premier orifice 51 du conduit 52 et participent également au renouvellement de l'air au niveau de la face ouverte 11 de la jante 1. Par ailleurs, la au moins une ailette 61 à la surface 11 de la jante 1 est susceptible d'être arrangée de façon à diriger le flux d'air sur la face ouverte 11 de la jante 1 vers le premier orifice 51 du conduit 52. Selon un exemple de réalisation, l'ailette 61 est susceptible de faire intervenir un relief 6 en saillie combiné avec un ou plusieurs reliefs 6 réalisés sous la forme d'évidement 62 positionnés de part et d'autre de ce relief en saillie. Un tel arrangement permet d'optimiser la surface de brassage de l'ailette 61 sans nécessiter une augmentation de l'épaisseur de la jante 1. L'ailette 61 est ainsi susceptible d'opérer un brassage efficace d'air en surface de la jante 1 sans réalisation d'un dépassement de la hauteur de la jante 1. Selon un exemple correspondant à une variante de construction spécifique, le relief 6 formé au niveau de la surface de la face ouverte 11 de la jante 1 est disposé de façon à être positionné à proximité de l'une des faces du conduit 52 dans l'épaisseur de la jante 1 en épousant au moins en partie la forme d'une portion de la surface du conduit 52. Aussi, dans un plan en section parallèle à l'axe de rotation de la jante 1 avec le galet de roulement, le relief 6 qui réalise une ailette 61 au niveau de la surface 11 de la jante 1 épouse, au moins en partie, la forme du conduit 52 réalisé par la jante 1. Lorsque la jante 1 comprend un dispositif de refroidissement 5 réalisé sous la forme de plusieurs conduits 52 respectifs, chaque conduit 52 est susceptible d'être associé à une ailette 61 respective qui réalise une saillie au niveau de la face ouverte 11 de la jante 1 et entre lesquelles la face ouverte 11 de la jante 1 comprend au moins un évidement 62. Selon un exemple correspondant à une autre variante de construction spécifique et susceptible d'être combinée avec la variante spécifique précédente, la face ouverte 11 de la jante 1 comprend une pluralité d'ailettes 61 disposées radialement. Cette pluralité d'ailette 61 permet la réalisation d'une face ouverte 11 de la jante 1 qui porte un mécanisme de turbulences permettant un renouvellement efficace de l'air au contact de la jante 1 dès sa mise en rotation dans le cadre du fonctionnement, d'une part, du flasque 4 du galet en interaction avec un rail et, d'autre part, du bandage 2, de sorte que la chaleur qui apparaît au niveau de ces différentes pièces et surfaces est susceptible d'être évacuée efficacement.

Selon un exemple se rapportant à une autre variante de construction susceptible d'être combinée avec les variantes de construction précédemment mentionnées, la face ouverte 11 de la jante 1 comprend au moins un relief 6 réalisant un évidement 62 dans l'épaisseur de la jante 1, à proximité du bord périphérique 12. Cette construction particulière, notamment lorsqu'elle se trouve combinée avec la présence d'un relief 6 en saillie qui participe à la réalisation d'au moins une ailette 61, permet le positionnement sur la face 11 de la jante 1 de moyens susceptibles de participer à la génération de turbulences et de mouvement d'air au niveau de la partie de la jante 1 qui connait la plus longue course et donc présente la vitesse de déplacement la plus importante. Aussi, en étant positionné au niveau de la partie la plus périphérique de la face ouverte 11 de la jante 1, le relief 6 réalisé par ce au moins un évidement 61 permet de maximiser la génération de turbulences à la surface de la jante 1. Ce relief 6 permet également d'augmenter les surfaces d'échange de chaleur de la jante 1 et donc d'augmenter l'efficacité du refroidissement.

Selon un exemple se rapportant à une autre variante de construction susceptible d'être combinée avec les variantes de construction précédemment mentionnées, le dispositif de refroidissement 5 comprend une pluralité de conduits 52 disposés radialement dans l'arrangement annulaire de la jante 1. Cet arrangement particulier des différents conduits 52 qui forment le dispositif de refroidissement 5 permet un échange thermique et une évacuation de chaleur, d'une part, au niveau de la surface de la bague extérieure 31 du galet la plus proche du mécanisme de roulement 3 et, d'autre part, au niveau de la surface 41 du flasque 4 du galet associé à la jante 1, mais encore au niveau de l'intégralité de la structure annulaire du bandage 2 qui entoure la jante 1. Par ailleurs, cette distribution radiale de conduits 52 du dispositif de refroidissement 5 est également susceptible d'être couplée à un arrangement de plusieurs ailettes 61 disposées radialement sur la face ouverte 11 de la jante 1.

L'invention concerne également un ensemble comprenant un galet de roulement réalisant un flasque 4 associé à une jante 1 de support de bandage 2 selon l'invention. La jante 1 de support de bandage 2 intègre alors un dispositif de refroidissement 5 tel que détaillé précédemment.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Jante (1) de support de bandage (2) pour un galet annulaire de roulement comprenant au moins une bague extérieure (31) dont une partie prolongée sous la forme d'un disque sur la périphérie de la bague extérieure (31) réalise un flasque (4) dont l'extrémité du bord périphérique est configurée pour coopérer avec un rail de guidage, la jante (1) comprenant un arrangement annulaire sensiblement circulaire définissant :
- un bord périphérique (12) destiné à porter un bandage (2),
- un bord médial (13) destiné à être en contact avec une surface extérieure médiale de la bague extérieure (31) du galet, et
- deux faces opposées réalisant, d'une part, une face ouverte (11) et, d'autre part, une face d'appui (14) configurée pour être positionnée contre la surface du flasque (4) du galet de roulement,
**caractérisée en ce que** la jante (1) de support intègre un dispositif de refroidissement (5) comprenant au moins un conduit (52) de circulation d'air traversant l'épaisseur de la jante (1) de sorte que le conduit (52) comprend au moins un orifice (51) positionnée au niveau de la face ouverte (11) de la jante (1) et un circuit arrangé de sorte que, d'une part, au moins une première portion (521) est positionnée au niveau du bord médial (13) du dispositif (5) et, d'autre part, au moins une seconde portion (522) est positionnée radialement au niveau de la face d'appui (14) depuis le bord médial (13) vers le bord périphérique (12) de la jante (1).

2. Jante (1) selon la revendication 1, **caractérisée en ce que** au moins une portion du conduit (52) est réalisée sous la forme d'une section ouverte destinée à être cloisonnée par au moins une partie de la surface extérieure médiale de la bague extérieure (31) du galet et/ou une partie de la surface (41) du flasque (4) du galet.

3. Jante (1) selon une des revendications 1 ou 2, **caractérisée en ce que** le conduit (52) comprend un second orifice (53) positionné à une distance de l'axe de pivotement de la jante (1) qui est différente de la distance séparant, d'une part, l'orifice (51) positionné au niveau de la face ouverte (11) de la jante (1) et, d'autre part, l'axe de pivotement de la jante (1).

4. Jante (1) selon une des revendications précédentes, **caractérisée en ce que** le conduit (52) au niveau de la seconde portion (522) de son circuit présente au moins une section plus importante qu'au niveau de la première portion (521) de son circuit.

5. Jante (1) selon la revendication 4, **caractérisée en ce que** au moins une partie de la seconde portion (522) du circuit du conduit (52) présente une section dont au moins une largeur est au moins supérieure à une épaisseur de la jante (1).

6. Jante (1) selon une des revendications précédentes, **caractérisée en ce que** le conduit (52) comprend au moins un second orifice (53) positionné au niveau du bord périphérique (12) de la jante (1).

7. Jante (1) selon une des revendications précédentes, **caractérisée en ce que** le conduit (52) comprend un seconde orifice (53) et/ou au moins un orifice supplémentaire positionné au niveau de la face (14) de la jante (1) en appui contre la surface (41) du flasque (4).

8. Jante (1) selon une des revendications précédentes, **caractérisée en ce que** la face ouverte (11) comprend au moins un relief (6) réalisant une ailette (61) orientée radialement.

9. Jante (1) selon une des revendications précédentes, **caractérisée en ce que** la face ouverte comprend au moins un relief réalisant un évidement dans l'épaisseur de la jante (1), à proximité du bord périphérique.

10. Jante (1) selon une des revendications précédentes, **caractérisée en ce que** le dispositif de refroidissement (5) comprend une pluralité de conduits (52) disposés radialement dans l'arrangement annulaire de la jante (1).

11. Ensemble comprenant un galet de roulement réalisant un flasque (4) associé à une jante (1) de support de bandage (2) selon une des revendications 1 à 10.

## Patentansprüche

1. Felge (1) zur Abstützung einer Bandage (2) für eine ringförmige Laufrolle, die mindestens einen Außenring (31) umfasst, von dem ein verlängerter Teil in der Form einer Scheibe auf dem Umfang des Außenringes (31) einen Flansch (4) bildet, von dem das Ende des Umfangsrandes dafür ausgelegt ist, mit einer Führungsschiene zusammenzuwirken, wobei die Felge (1) eine im Wesentlichen kreisförmige ringförmige Anordnung umfasst, welche definiert:
- einen Umfangsrand (12), der dazu bestimmt ist, eine Bandage (2) zu tragen,
- einen medialen Rand (13), der dazu bestimmt ist, sich in Kontakt mit einer medialen Außenfläche des Außenringes (31) der Rolle zu befinden, und
- zwei gegenüberliegende Seiten, die einerseits eine offene Seite (11) und andererseits eine Anlageseite (14), die dafür ausgelegt ist, an der Fläche des Flansches (4) der Laufrolle anliegend positioniert zu werden, bilden, **dadurch gekennzeichnet, dass** in die Stützfelge (1) eine Kühlvorrichtung (5) integriert ist, die mindestens einen Luftströmungskanal (52) umfasst, der die Dicke der Felge (1) durchquert, derart, dass der Kanal (52) mindestens eine Öffnung (51), die an der offenen Seite (11) der Felge (1) positioniert ist, und einen Kreislauf umfasst, der so angeordnet ist, dass einerseits mindestens ein erster Abschnitt (521) an dem medialen Rand (13) der Vorrichtung (5) positioniert ist und andererseits mindestens ein zweiter Abschnitt (522) radial an der Anlageseite (14) vom medialen Rand (13) zum Umfangsrand (12) der Felge (1) hin positioniert ist.

2. Felge (1) nach Anspruch 1, **dadurch gekennzeichnet, dass** mindestens ein Abschnitt des Kanals (52) in der Form eines offenen Querschnitts ausgebildet ist, der dazu bestimmt ist, durch mindestens einen Teil der medialen Außenfläche des Außenringes (31) der Rolle und/oder einen Teil der Fläche (41) des Flansches (4) der Rolle geschlossen zu werden.

3. Felge (1) nach einem der Ansprüche 1 oder 2, **dadurch gekennzeichnet, dass** der Kanal (52) eine zweite Öffnung (53) umfasst, die in einem Abstand von der Schwenkachse der Felge (1) positioniert ist, der von dem Abstand, welcher einerseits die an der offenen Seite (11) der Felge (1) positionierte Öffnung (51) und andererseits die Schwenkachse der Felge (1) trennt, verschieden ist.

4. Felge (1) nach dem vorhergehenden Anspruch, **dadurch gekennzeichnet, dass** der Kanal (52) am zweiten Abschnitt (522) seines Kreislaufs mindestens einen Querschnitt aufweist, der größer als am ersten Abschnitt (521) seines Kreislaufs ist.

5. Felge (1) nach Anspruch 4, **dadurch gekennzeichnet, dass** mindestens ein Teil des zweiten Abschnitts (522) des Kreislaufs des Kanals (52) einen Querschnitt aufweist, von dem mindestens eine Breite mindestens größer als eine Dicke der Felge (1) ist.

6. Felge (1) nach einem der vorhergehenden Ansprüche, **dadurch gekennzeichnet, dass** der Kanal (52) mindestens eine zweite Öffnung (53) aufweist, die Umfangsrand (12) der Felge (1) positioniert ist.

7. Felge (1) nach einem der vorhergehenden Ansprüche, **dadurch gekennzeichnet, dass** der Kanal (52) eine zweite Öffnung (53) und/oder mindestens eine zusätzliche Öffnung aufweist, die an der Seite (14) der Felge (1) positioniert ist, die an der Fläche (41) des Flansches (4) anliegt.

8. Felge (1) nach einem der vorhergehenden Ansprüche, **dadurch gekennzeichnet, dass** die offene Seite (11) mindestens ein Relief (6) umfasst, das einen radial ausgerichteten Flügel (61) bildet.

9. Felge (1) nach einem der vorhergehenden Ansprüche, **dadurch gekennzeichnet, dass** die offene Seite mindestens ein Relief umfasst, das eine Vertiefung in der Dicke der Felge (1) in der Nähe des Umfangsrandes bildet.

10. Felge (1) nach einem der vorhergehenden Ansprüche, **dadurch gekennzeichnet, dass** die Kühlvorrichtung (5) mehrere Kanäle (52) umfasst, die in der ringförmigen Anordnung der Felge (1) radial angeordnet sind.

11. Anordnung, welche eine Laufrolle umfasst, an der ein Flansch (4) ausgebildet ist, der einer Felge (1) zur Abstützung einer Bandage (2) nach einem der Ansprüche 1 bis 10 zugeordnet ist.

## Claims

1. Tire (2) support rim (1) for an annular track roller comprising at least one outer ring (31) of which a prolonged part in the form of a disk on the periphery of the outer ring (31) produces a flange (4) of which the end of the peripheral edge is configured to cooperate with a guiding rail, the rim (1) comprising a substantially circular annular arrangement defining:
- a peripheral edge (12) intended to bear a tire (2),
- a medial edge (13) intended to be in contact with a medial outer surface of the outer ring (31) of the roller, and
- two opposite faces producing, on the one hand, an open face (11) and, on the other hand, a bearing face (14) configured to be positioned against the surface of the flange (4) of the track roller,
**characterized in that** the support rim (1) incorporates a cooling device (5) comprising at least one circulation duct (52) for air passing through the thickness of the rim (1) such that the duct (52) comprises at least one orifice (51) positioned on the open face (11) of the rim (1) and a circuit arranged such that, on the one hand, at least a first portion (521) is positioned at the medial edge (13) of the device (5) and, on the other hand, at least a second portion (522) is positioned radially on the bearing face (14) from the medial edge (13) toward the peripheral edge (12) of the rim (1).

2. Rim (1) according to Claim 1, **characterized in that** at least a portion of the duct (52) is produced in the form of an open section intended to be partitioned by at least a part of the medial outer surface of the outer ring (31) of the roller and/or a part of the surface (41) of the flange (4) of the roller.

3. Rim (1) according to one of Claims 1 and 2, **characterized in that** the duct (52) comprises a second orifice (53) positioned at a distance from the pivoting axis of the rim (1) which is different from the distance separating, on the one hand, the orifice (51) positioned on the open face (11) of the rim (1) and, on the other hand, the pivoting axis of the rim (1).

4. Rim (1) according to one of the preceding claims, **characterized in that** the duct (52) in the second portion (522) of its circuit has at least one section that is greater than in the first portion (521) of its circuit.

5. Rim (1) according to Claim 4, **characterized in that** at least a part of the second portion (522) of the circuit of the duct (52) has a section of which at least one width is at least greater than a thickness of the rim (1) .

6. Rim (1) according to one of the preceding claims, **characterized in that** the duct (52) comprises at least one second orifice (53) positioned at the peripheral edge (12) of the rim (1) .

7. Rim (1) according to one of the preceding claims, **characterized in that** the duct (52) comprises a second orifice (53) and/or at least one additional orifice positioned on the face (14) of the rim (1) bearing against the surface (41) of the flange (4).

8. Rim (1) according to one of the preceding claims, **characterized in that** the open face (11) comprises at least one relief (6) producing a radially oriented fin (61) .

9. Rim (1) according to one of the preceding claims, **characterized in that** the open face comprises at least one relief producing a void in the thickness of the rim (1), in proximity to the peripheral edge.

10. Rim (1) according to one of the preceding claims, **characterized in that** the cooling device (5) comprises a plurality of ducts (52) disposed radially in the annular arrangement of the rim (1).

11. Assembly comprising a track roller producing a flange (4) associated with a tire (2) support rim (1) according to one of Claims 1 to 10.
